# EUROPÄISCHE PATENTSCHRIFT

(11) **EP 0 508 491 B1**
(45) Veröffentlichungstag und Bekanntmachung des Hinweises auf die Patenterteilung: **26.01.1994**
(21) Anmeldenummer: 92108218.6
(22) Anmeldetag: 15.05.1992
(51) Int. Cl.: C08G 77/38, C07F 7/18, C07F 7/12, C08G 77/20, C08G 77/10, C08J 3/28, C09D 183/06

(54) **(Meth)acryloxygruppen aufweisende Organosiliciumverbindungen, deren Herstellung und Verwendung**
(Meth)acryloxy-functional organosilicon compounds, their preparation and their use
Composés organosiliciés comportant des groupes (meth)acryloxy, leur préparation et leur utilisation

(30) Priorität: 16.05.1991 DE 4116013
(43) Veröffentlichungstag der Anmeldung: 14.10.1992
(73) Patentinhaber: WACKER-CHEMIE GMBH, D-81737 München (DE)
(72) Erfinder: Herzig, Christian, Dr., W-8221 Taching (DE); Deubzer, Bernward, Dr., W-8263 Burghausen (DE); Sigl, Inge, W-8263 Burghausen (DE)

(56) Entgegenhaltungen:
- EP-A- 0 130 731
- EP-A- 0 247 501
- EP-A- 0 336 633
- US-A- 3 746 734
- US-A- 4 503 208
- US-A- 4 568 566

## Beschreibung

Gemäß US-A 4,503,208 (ausgegeben 5. März 1985, Samuel Q. S. Lin et al., Loctite Corporation) werden Acryloxygruppen aufweisende Organopolysiloxane in einer Hydrosilylierungsreaktion durch Umsetzung von Organopolysiloxan mit Si-gebundenem Wasserstoff mit Propargyl(meth)acrylat erhalten. Der zur Herstellung des Propargyl(meth)acrylats eingesetzte Propargylalkohol weist eine verhältnismäßig hohe Toxizität auf, und die Veresterung von Propargylalkohol mit (Meth)acrylsäure ergibt schlechte Ausbeuten an Propargyl(meth)acrylat.

Auch die in US-A 3,746,734 beschriebenen Acryloxygruppen aufweisenden Silane werden durch Umsetzung von Silan mit Si-gebundenem Wasserstoff mit Propargyl(meth)acrylat in Gegenwart eines Hydrosilylierungskatalysators hergestellt.

In EP-A 336 633 sind Organopolysiloxane beschrieben, die eine lineare Diorganopolysiloxankette enthalten, die an einem Kettenende eine Acrylfunktion aufweist und deren anderes Kettenende in einen Siloxananteil mit M-, T- und Q-Siloxaneinheiten mündet. Gemäß Beispiel 2 wird die Arylfunktion über Acryloxypropenyldimethylchlorsilan eingeführt, welches wiederum durch Umsetzung von Dimethylchlorsilan mit Propargylacrylat in Gegenwart eines Hydrosilylierungskatalysators erhalten wird.

Aus EP-A 130 731 (offengelegt 9. Januar 1985, Samuel Q. S. Lin et al., Loctite Corporation) ist die Umsetzung von Organopolysiloxan mit Si-gebundenem Wasserstoff mit Beta(allyloxy)ethylmethacrylat in Gegenwart eines Hydrosilylierungskatalysators bekannt. Hierbei werden Methacryloxyoxygruppen aufweisende Organopolysiloxane erhalten. Acryloxygruppen aufweisende Organopolysiloxane sind durch analoge Umsetzung nicht selektiv erhältlich, da die Hydrosilylierung sowohl am Acryl- als auch am Allylrest auftritt.

Es bestand die Aufgabe, (Meth)acryloxygruppen aufweisende Organosiliciumverbindungen bereitzustellen, die in einem einfachen Verfahren mit hoher Selektivität und unter Verwendung leicht zugänglicher Ausgangsstoffe hergestellt werden können. Die Aufgabe wird durch die Erfindung gelöst.

Gegenstand der Erfindung sind (Meth)acryloxygruppen aufweisende Organosiliciumverbindungen mit durchschnittlichen Einheiten der Formel
AₐR_{b}SiX_{c}O4-(a+b+c) (I), 2

wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist,
wobei R¹ einen Alkylrest mit 1 bis 8 Kohlenstoffatom(en) je Rest, der durch ein Ethersauerstoffatom substituiert sein kann, bedeutet,
a 0 oder 1, durchschnittlich 0,01 bis 1,0,
b 0, 1, 2 oder 3, durchschnittlich 0,0 bis 3,0,
c 0, 1, 2 oder 3, durchschnittlich 0,0 bis 3,0,
und die Summe a+b+c -- 4, durchschnittlich 1,5 bis 4,0, ist und
A ein Rest der Formel 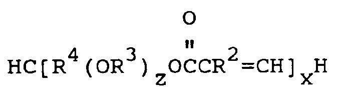 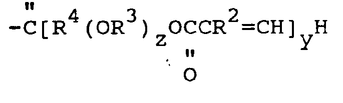 ist, wobei x 0 oder 1 und y 0 oder 1 ist, mit der Maßgabe, daß die Summe x+y 1 ist,
z 1, 2, 3 oder 4,
R² ein Wasserstoffatom oder einen Methylrest,
R³ einen Rest der Formel -CH₂CH₂- oder -C(CH₃)HCH₂- und
R⁴ einen linearen oder verzweigten Alkylenrest mit 1 bis 6 Kohlenstoffatom(en) je Rest bedeutet

mit der Maßgabe, daß mindestens ein Rest Aje Molekül enthalten ist.

Gegenstand der Erfindung ist weiterhin ein Verfahren zur Herstellung der (Meth)acryloxygruppen aufweisenden Organosiliciumverbindungen, dadurch gekennzeichnet, daß eine organische Verbindung (1) der Formel 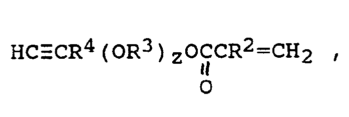 wobei R², R³, R⁴ und z die oben dafür angegebene Bedeutung haben, an eine Organosiliciumverbindung (2) mit mindestens einem Si-gebundenen Wassserstoffatom in ihrem Molekül in Gegenwart von die Anlagerung von Si-gebundenem Wasserstoff an aliphatische Mehrfachbindung förderndem Katalysator (3) angelagert wird.

Vorzugsweise sind die erfindungsmäßigen Organosiliciumverbindungen Silane oder Organopolysiloxane.

Die erfindungsgemäßen Organosiliciumverbindungen besitzen vorzugsweise ein durchschnittliches Molekulargewicht von 246 bis 1 000 000 g/Mol, bevorzugt 300 bis 50 000 g/Mol, und vorzugsweise eine Viskosität von 5 bis 1 000 000 mm^{2.}s-¹ bei 25°C, bevorzugt 20 bis 100 000 mm^{2.}s-¹ bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der a- und der ß-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beispiele für Alkylreste R¹ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste R¹, die durch ein Ethersauerstoffatom substituiert sind, sind der Methoxyethyl- und Ethoxyethylrest.

Bevorzugt ist der Rest R², ein Wasserstoffatom.

Bevorzugt ist R³, ein Rest der Formel -CH₂CH₂-.

Beispiele für Alkylenreste R⁴ sind solche der Formel -(CH₂)-, -CH(CH₃)-, -C(CH₃)₂-, -C(CH₃)(C₂H₅)-, -(CH₂)₂-, und -(CH₂)₄-, wobei der Rest der Formel -(CH₂)- bevorzugt ist.

Beispiele für Reste A sind solche der Formel 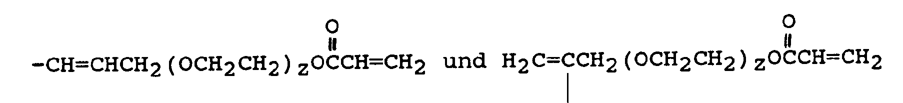 sowie 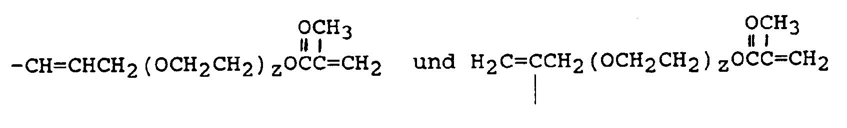 wobei z die oben dafür angegebene Beutung hat, bevorzugt 1 oder 2, besonders bevorzugt 1 ist.

Bevorzugt als (Meth)acryloxygruppen aufweisende Silane sind solche der Formel 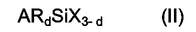 wobei A, R und X die oben dafür angegebene Bedeutung haben und d 0, 1, oder 2 ist.

Bevorzugt als (Meth)acryloxygruppen aufweisende Organopolysiloxane sind solche der Formel 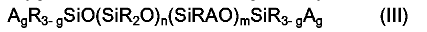 wobei A und R die oben dafür angegebene Bedeutung haben,
g 0 oder 1,
n 0 oder eine ganze Zahl von 1 bis 1500 und
m 0 oder eine ganze Zahl von 1 bis 100 ist,

mit der Maßgabe, daß mindestens ein Rest Aje Molekül enthalten ist.

Beispiele für organische Verbindungen (1), die bei dem erfindungsgemäßen Verfahren eingesetzt werden, sind solche der Formel 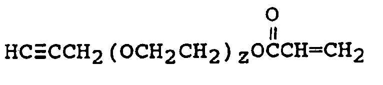 und 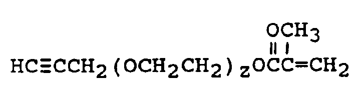 wobei z die oben dafür angegebene Bedeutung hat, bevorzugt 1 oder 2, besonders bevorzugt 1 ist.

Die organischen Verbindungen (1) werden durch Veresterung von Alkinoxyalkanolen der Formel 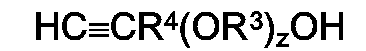 (wobei R³, R⁴ und z die oben dafür angegebene Bedeutung haben),
die durch Umsetzung von Alkinolen mit Ethylenoxid oder Propylenoxid erhältlich sind,
mit (Meth)acrylsäure hergestellt.
Als Katalysatoren werden Säuren, wie p-Toluolsulfonsäure, Trifluormethansulfonsäure oder Schwefelsäure eingesetzt, und als Schleppmittel Kohlenwasserstoffe, wie Cyclohexan, Benzol oder Toluol verwendet. Stabilisatorzusätze sind vorteilhaft; Verwendung finden Radikalstopper, wie Phenothiazin, Methoxyphenol, butyliertes Hydroxytoluol, Kupfer oder Kupferverbindungen.

2-Propinoxyethanol ist beispielsweise unter der Bezeichnung Golpanol PME bei der Fa. BASF käuflich erwerblich und hat im Vergleich zu Propargylalkohol eine wesentlich geringere Toxizität.

Herstellungsbedingt, auch abhängig von dem eingesetzten Alkinoxyalkinol, kann z in der organischen Verbindung (1) durchschnittlich einen Wert kleiner als 1 oder zwischen 1 und 2 besitzen.

Vorzugsweise werden als Organosiliciumverbindung (2) mit mindestens einem Si-gebundenen Wasserstoffatom je Molekül Silane mit einem Si-gebundenen Wasserstoffatom je Molekül oder Organopolysiloxane mit mindestens einem Si-gebundenen Wasserstoffatom je Molekül der Formel 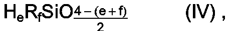 wobei R die oben dafür angegebene Bedeutung hat,
e 0 oder 1, durchschnittlich 0,01 bis 1,0,
f 0, 1, 2 oder 3, durchschnittlich 0,0 bis 3,0 und

die Summe von e+f nicht größer als 3 ist, eingesetzt.

Die Organopolysiloxane mit mindestens einem Si-gebundenen Wasserstoffatom enthalten vorzugsweise mindestens 0,04 Gew.-%, bevorzugt 0,1 bis 1,6 Gew.-%, Si-gebundenen Wasserstoff und ihre durchschnittliche Viskosität beträgt vorzugsweise 2 bis 20 000 mm^{2.}s-¹ bei 25°C, bevorzugt 2 bis 2000 mm^{2.}s-¹ bei 25°C, besonders bevorzugt 2 bis 200 mm^{2.}s-¹ bei 25°C.

Bevorzugt werden als Silane mit einem Si-gebundenen Wasserstoffatom je Molekül solche der Formel 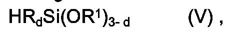 wobei R, R¹ und d die oben dafür angegebene Bedeutung haben, verwendet.

Bevorzugt werden als Organopolysiloxane mit mindestens einem Si-gebundenen Wasserstoffatom je Molekül solche der Formel 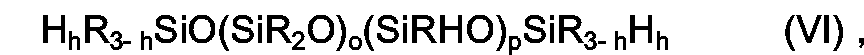 wobei R die oben dafür angegebene Bedeutung hat,
h 0 oder 1,
o 0 oder eine ganze Zahl von 1 bis 1500 und
p 0 oder eine ganze Zahl von 1 bis 100 ist,

verwendet.

Ein bevorzugtes Beispiel für Silane der Formel (V) ist Triethoxysilan. Bevorzugte Beispiele für Organopolysiloxane der Formel (VI) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von Organopolysiloxanen mit mindestens einem Si-gebundenem Wasserstoffatom je Molekül, auch von solchen der bevorzugten Art, sind allgemein bekannt.

Organische Verbindung (1) wird bei dem erfindungsgemäßen Verfahren vorzugsweise in solchen Mengen eingesetzt, daß 1 bis 2 Mol, bevorzugt 1,05 bis 1,20 Mol, organische Verbindung (1)je Grammatom Si-gebundener Wasserstoff in der Organosiliciumverbindung (2) vorliegt.
In Einzelfällen, wenn die eingesetzte Si-gebundene Wasserstoffatome aufweisende Organosiliciumverbindung (2) leichter destillativ entfernbar ist als die eingesetzte organische Verbindung (1) kann die organische Verbindung (1) in Mengen unter 1 Mol, maximal bis 0,8 Mol je Grammatom Si-gebundener Wasserstoff in der Organosiliciumverbindung (2) eingesetzt werden.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtC1₄, H₂PtC1₆*6H₂0, Na₂PtC1₄*4H₂0, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtC1₆*6H₂0 und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(11)-dichlorid, Cyclooctadien-Platindichlorid, Norbornadien-Platindichlorid, Gammapicolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von organischer Verbindung (1) und Organosiliciumverbindung (2) eingesetzt.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 80°C bis 150°C, bevorzugt 110°C bis 125°C, durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere und Butylacetat.

Von den nach dem erfindungsgemäßen Verfahren hergestellten Alkenylgruppen enthaltenden Organosiliciumverbindungen wird vorzugsweise überschüssige organische Verbindung (1) sowie gegebenenfalls mitverwendetes inertes organisches Lösungsmittel destillativ entfernt.

Die nach dem erfindungsgemäßen Verfahren erhaltenen (Meth)acryloxygruppen aufweisenden Silane können durch Mischhydrolyse mit Chlor- oder Alkoxysilanen und/oder durch Kondensation mit kondensationsfähigen Organopolysiloxanen in an sich bekannter Weise zu (Meth)acryloxygruppen aufweisenden Organopolysiloxanen umgesetzt werden.

Vorzugsweise werden als Chlor- oder Alkoxysilane solche der Formel 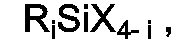 wobei R und X die oben dafür angegebene Bedeutung haben und i 0, 1, 2 oder 3 ist, eingesetzt.

Vorzugsweise werden als kondensationsfähige Organopolysiloxane solche der Formel 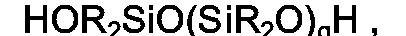 wobei R die oben dafür angegebene Bedeutung hat und q eine ganze Zahl im Wert von mindestens 1 ist, oder aus cyclischen Organopolysiloxanen der Formel 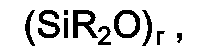 wobei R die oben dafür angegebene Bedeutung hat und reine ganze Zahl im Wert von 3 bis 10 bedeutet, durch Kondensation und/oder Equilibrierung in an sich bekannter Weise gewonnene lineare, kondensationsfähige Organopolysiloxane eingesetzt.

Die nach dem erfindungsgemäßen Verfahren erhaltenen (Meth)acryloxygruppen aufweisenden Organopolysiloxane können mit Organopolysiloxanen (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel 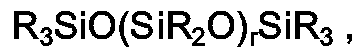 wobei R die oben dafür angegebene Bedeutung hat und r 0 oder eine ganze Zahl im Wert von 1 bis 1500 ist, als lineare, endständige Hydroxylgruppen aufweisende Organopolysiloxane solche der Formel 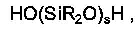 wobei R die oben dafür angegebene Bedeutung hat und s eine ganze Zahl im Wert von 1 bis 1500 ist, als cyclische Organopolysiloxane solche der Formel 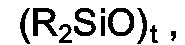 wobei R die oben dafür angegebene Bedeutung hat und t eine ganze Zahl von 3 bis 12 ist, und als Mischpolymerisate solche aus Einheiten der Formel 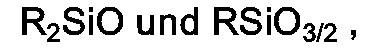 wobei R die oben dafür angegebene Bedeutung hat, eingesetzt.

Die Mengenverhältnisse der bei der gegebenenfalls durchgeführten Equilibrierung eingesetzten Organopolysiloxane (4) und (Meth)acryloxygruppen aufweisenden Organopolysiloxane werden lediglich durch den gewünschten Anteil der (Meth)acrylgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise saure Katalysatoren, welche die Equilibrierung fördern, eingesetzt. Beispiele für solche Katalysatoren sind Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Organosiliciumverbindungen, in mit Wasser nichtmischbarem Lösungsmittel, wie Toluol, durchgeführt.

Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Gegenstand der Erfindung sind weiterhin durch Bestrahlung mit Licht vernetzbare Zusammensetzungen enthaltend
(A) (Meth)acryloxygruppen aufweisende Organopolysiloxane gemäß Anspruch 1, 4 oder 5 und
(B) Photosensibilisator.

Die durch Bestrahlung mit Licht vernetzbaren Zusammensetzungen werden zur Herstellung von Überzügen verwendet.

Vorzugsweise werden die erfindungsgemäßen (Meth)acryloxygruppen aufweisenden Organopolysiloxane durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet.

Geeignete Photosensibilisatoren sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphthalinsulfonsäuren und Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-(Methylthio)phenyl]-2-morpholinpropanon-1, Benzophenon; substituierte Benzophenone, wie Michlers Keton, 3-Methoxybenzophenon, 4,4'-Dimethylaminobenzophenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropenylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphthalinsulfonylchlorid; Benzaldehyd; Zimtsäure.

Photosensibilisatoren sind in den erfindungsgemäßen Zusammensetzungen vorzugsweise in Mengen von 0,01 bis 10 Gewichts-%, insbesondere von 0,5 bis 5 Gewichtsprozent, jeweils bezogen auf das Gesamtgewicht der zu vernetzenden Organopolysiloxane, eingesetzt.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen durch Bestrahlung mit Licht vernetzbaren Zusammensetzungen auf die zu überziehenden Oberflächen kann in beliebiger, für die Herstellung von Überzügen aus flüssigen Stoffen geeigneter und vielfach bekannterweise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

### Herstellung von 2-Propargyloxyethylacrylat:

540 g 2-Propinoxyethanol (käuflich erwerblich unter dem Handelsnamen "Golpanol PME" bei der Fa. BASF, C≡C-Equivalentgewicht: 108) werden unter Zusatz von 500 ml Toluol, 2,5 g Phenothiazin, 2 g CuCI und 5 g konz. H₂S0₄ mit 540 g (7,5 Mol) Acrylsäure azeotrop verestert. Innerhalb von 4 Stunden werden bei steigender Sumpftemperatur (110 - 125°C) 120 ml wäßrige Phase abgeschieden, die laut Säuretitration 24,5 g Acrylsäure enthält. Überschüssige Acrylsäure wird durch NaHC0₃ weitgehend neutralisiert und mit insgesamt 400 ml H₂0 ausgewaschen. Toluol wird im Vakuum abdestilliert, danach der Acrylester selbst unter Zusatz von 1 g Phenothiazin bei 2 hPa (abs.). Es werden 692 g (= 85 % d. Th.) des leicht gelblichen Acrylats mit einem Dreifachbindungsequivalentgewichtvon 170 erhalten. Dem ¹H-NMR-Spektrum ist zu entnehmen, daß das Destillat außer 2-Propargyloxyethylacrylat auch höher ethoxylierte Acrylate enthält und entsprechend dem eingesetzten 2-Propinoxyethanol im Durchschnitt der Formel 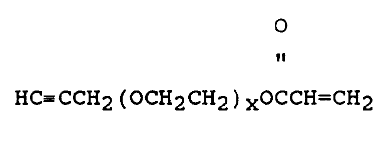 mit x = 1,2 genügt. Das Alkinproton ist als typisches Triplett erkennbar, bei 2,52 ppm (x = 1) und 2,49 ppm (x = 2).

### Beispiel 1:

170 g (= 1,00 val C≡C) 2-Propargyloxyethylacrylat, dessen Herstellung oben beschrieben ist, werden mit 3 mg Platin in Form einer Lösung von Platintetrachlorid in 1-Octen versetzt und unter Stickstoffatmosphäre auf 115°C erwärmt. Innerhalb von 1,5 Stunden werden 170 g (= 1,03 Mol) Hydrogentriethoxysilan zudosiert und es wird die Reaktionsmischung noch 1 Stunde bei gleicher Temperatur gehalten. Die volumetrische Bestimmung von mit Kaliumhydroxyd freigesetztem Wasserstoff zeigt einen Umsatz von mehr als 98 % bezogen auf eingesetzte Dreifachbindung. Überschüssiges Hydrogentriethoxysilan wird bei 100°C und 2 hPa (abs.) destillativ entfernt. Man erhält in quantitativerAusbeute (333 g) das Additionsprodukt der Ausgangskomponenten in Form der 1-Silyl- und 2-Silylisomeren als gelbliche, leicht bewegliche Flüssigkeit der Viskosität 7,9 mm²s-¹ bei 25°C.
¹H-NMR-Spektrum (CDCI₃):
   1-Silylisomer (48 %) : δ = 5,72 ppm (dtr, a), 6,44 ppm (dtr, b). 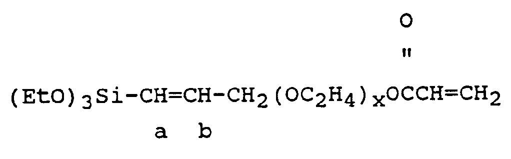
   2-Silylisomer (52 %) : 5 = 5,77 ppm (dtr, a') 5,99 ppm (dtr, b') 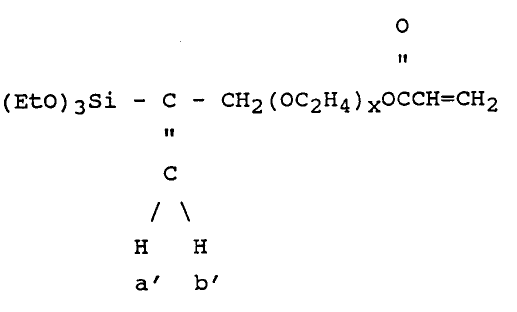
Eine SiCH₂CH₂C0₂-Gruppierung ist nicht nachweisbar (Erfassungsgrenze ca. 1 Mol%).

### Beispiel 2:

187 g (= 1,1 val C≡C) 2-Propargyloxyethylacrylat, dessen Herstellung oben beschrieben ist, werden mit jeweils 120 mg Methoxyphenol und Phenothiazin versetzt. Es werden dann 4 mg Platin in Form einer Lösung von Platintetrachlorid in 1-Octen zugegeben und die Mischung wird auf 115°C erwärmt. Innerhalb von ca. 2 Stunden werden insgesamt 455 g eines a, ω-Dihydrogendimethylpolysiloxans (= 1,0 val SiH) zugetropft. Die SiH-Analytik durch volumetrische Bestimmung von alkalisch freigesetztem Wasserstoff ergibt nach einer weiteren Stunde über 97 % Umsatz. Es wird ein gelbliches Öl mit der Jodzahl (= Zahl, die angibt, wieviel g Jod von 100 g Substanz gebunden werden) von 82 und einer Viskosität von 21 mm²s⁻¹ bei 25°C erhalten. Entsprechend dem ¹H-NMR-Spektrum (CDCl₃) hat die Dimethylpolysiloxankette die isomeren Endgruppen 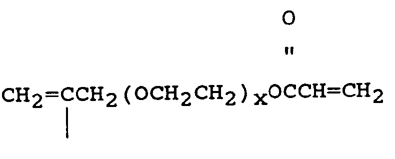 und 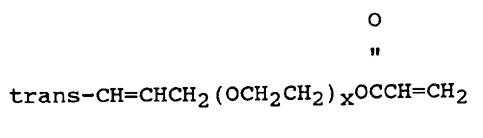 im Verhältnis 33 : 67 mit x durchschnittlich 1,2. Die geminalen Protonen -C=CH₂ des ersten Isomers haben Signale bei 5,55 ppm und 5,80 ppm, die beiden trans-Protonen des zweiten Isomers sind im Bereich 5,90 ppm und 6,15 ppm bei einer I(trans)-Kopplung von 19 Hz im ¹H-NMR-Spektrum zu finden.

### Beispiel 3:

Die Arbeitsweise von Beispiel 2 wird wiederholt mit der Abänderung, daß insgesamt 690 g eines Mischpolymerisats aus Dimethylsiloxan-, Methylhydrogensiloxan- und Trimethylsiloxaneinheiten, das 0,145 Gew.- % Si-gebundenen Wasserstoff enthält, anstelle der 455 g des α,ω-Dihydrogendimethylpolysiloxans zugetropft werden. Nach weiteren 4 Stunden Reaktionszeit sind ca. 97 % Umsatz erreicht. Die Reaktionsmischung wird abgekühlt, filtriert und es werden 860 g eines gelben Öls mit der Viskosität von 130 mm²s-¹ bei 25°C und der Jodzahl von 58 erhalten. Die Signale der olefinischen Protonen im ¹H-NMR-Spektrum ergeben ein Isomerenverhältnis von 1-Silylprodukt : 2-Silylprodukt von ca. 55 : 45.

### Beispiel 4:

100 g des Produkts von Beispiel 2 werden mit 800 g α,ω-Dihydroxydimethylpolysiloxan der Viskosität 20 000 mm²s-¹ unter Zusatz von 100 ppm Phosphornitridchlorid bei 100°C eine Stunde lang equilibriert. Durch Rühren mit 9 g MgO wird der Katalysator desaktiviert. Die Reaktionsmischung wird filtriert und flüchtige Bestandteile werden bei 100°C und 2 hPa (abs.) destillativ entfernt. Das klare, fast farblose Polymer hat eine Viskosität von 610 mm²s⁻¹ bei 25°C und zeigt im Gelpermeationschromatografie-Spektrum einen gleichmäßigen Peak für monomodale Molekulargewichtsverteilung. Zur besseren Lagerstabilität kann das Polymer mit 100 ppm Methoxyphenol inhibiert werden.

### Beispiel 5:

357 g (= 2,1 val C≡C) 2-Propargyloxyethylacrylat, dessen Herstellung oben beschrieben ist, werden mit 40 mg 4-Methoxyphenol und 14 mg Platin in Form einer Lösung von Platintetrachlorid in 1-Octen versetzt. Bei 115°C werden unter Stickstoffatmosphäre innerhalb von ca. 3 Stunden insgesamt 230 g (2,0 Mol) Methyldichlorsilan zugetropft. Nach weiteren 2 Stunden ist die Reaktion beendet. Nach Entfernung der flüchtigen Bestandteile im Vakuum bei 5 hPa (abs.) werden 585 g eines Additionsprodukts der Ausgangskomponenten in Form der 1-Silyl- und 2-Silylisomeren erhalten, das ca. 3 Gew.-% Ausgangskomponenten enthält. Das Produkt hat eine Säurezahl von 375.
¹H-NMR-Spektrum (CDCI₃):
   1-Silylisomer (21%): 5 = 5,86 ppm (dtr, a), 6,53 ppm (dtr, b). 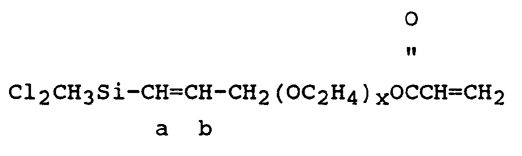 x = 1,2
   2-Silylisomer (79 %) : δ = 5,92 ppm (dtr, a') 6,06 ppm (dtr, b') 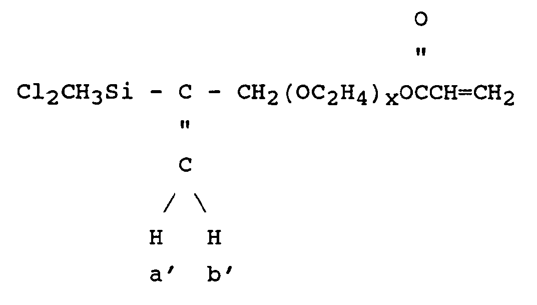 x = 1,2

### Beispiel 6:

Das Produkt aus Beispiel 2 mit einem Acrylatequivalentgewichtvon ca. 600 g / acrylischer Doppelbindung wird mit 3 Gew.-% des Photosensibilisators mit dem Handelsnamen Darocur^{R} 1173 (käuflich erwerblich bei der Fa. Merck) gemischt und in 500 µ Schichtdicke auf eine Polyethylenfolie aufgetragen. Durch Bestrahlung mit zwei Quecksilbermitteldrucklampen mit einer Leistung von 80 Watt/cm Leuchtlänge im Abstand von 10 cm wird das Polymer in 2 Sekunden vernetzt. Die Oberfläche des Überzuges ist klebfrei.

## Patentansprüche (Patentansprüche für folgende(n) Vertragsstaat(en) : AT, BE, CH, DE, FR, GB, IT, LI, NL)

1. (Meth)acryloxygruppen aufweisende Organosiliciumverbindungen mit durchschnittlichen Einheiten der Formel 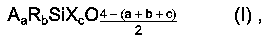 wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist,
wobei R¹ einen Alkylrest mit 1 bis 8 Kohlenstoffatom(en) je Rest, der durch ein Ethersauerstoffatom substituiert sein kann, bedeutet,
a 0 oder 1, durchschnittlich 0,01 bis 1,0,
b 0, 1, 2 oder 3, durchschnittlich 0,0 bis 3,0,
c 0, 1, 2 oder 3, durchschnittlich 0,0 bis 3,0,
und die Summe a+b+c ≦ 4, durchschnittlich 1,5 bis 4,0, ist und
A ein Rest der Formel 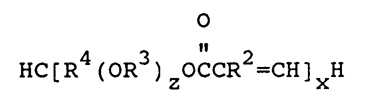 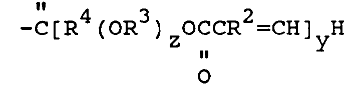 ist, wobei x 0 oder 1 und y 0 oder 1 ist, mit der Maßgabe, daß die Summe x+y 1 ist,
z 1, 2, 3 oder 4,
R² ein Wasserstoffatom oder einen Methylrest,
R³ einen Rest der Formel -CH₂CH₂- oder -C(CH₃)HCH₂- und
R⁴ einen linearen oder verzweigten Alkylenrest mit 1 bis 6 Kohlenstoffatom(en) je Rest bedeutet, mit der Maßgabe, daß mindestens ein Rest Aje Molekül enthalten ist.

2. (Meth)acryloxygruppen aufweisende Organosiliciumverbindungen nach Anspruch 1, dadurch gekennzeichnet, daß es Silane oder Organopolysiloxane sind.

3. (Meth)acryloxygruppen aufweisende Organosiliciumverbindungen nach Anspruch 1 oder 2, dadurch gekennzeichnet, daß es Silane der Formel 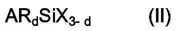 sind, wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist, wobei R¹ einen Alkylrest mit 1 bis 8 Kohlenstoffatom(en) je Rest, der durch ein Ethersauerstoffatom substituiert sein kann, bedeutet,
d 0, 1 oder 2 bedeutet und
A ein Rest der Formel 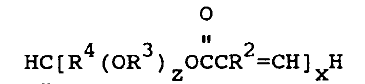 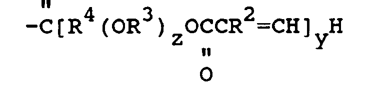 ist, wobei x 0 oder 1 und y 0 oder 1 ist, mit der Maßgabe,
daß die Summe x+y 1 ist,
z 1, 2, 3 oder 4,
R² ein Wasserstoffatom oder einen Methylrest,
R³ einen Rest der Formel -CH₂CH₂- oder -C(CH₃)HCH₂- und
R⁴ einen linearen oder verzweigten Alkylenrest mit 1 bis 6 Kohlenstoffatom(en) je Rest bedeutet.

4. (Meth)acryloxygruppen aufweisende Organosiliciumverbindungen nach Anspruch 1 oder 2, dadurch gekennzeichnet, daß es Organopolysiloxane der Formel 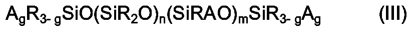 sind, wobei R gleich oder verschieden ist, einen einwertigen, gegebenenfalls halogenierten Kohlenwasserstoffrest mit 1 bis 18 Kohlenstoffatom(en) je Rest bedeutet,
A ein Rest der Formel 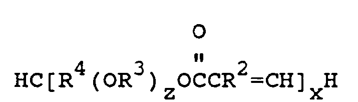 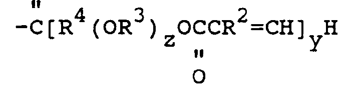 ist, wobei x 0 oder 1 und y 0 oder 1 ist, mit der Maßgabe, daß die Summe x+y 1 ist,
z 1, 2, 3 oder 4,
R² ein Wasserstoffatom oder einen Methylrest,
R³ einen Rest der Formel -CH₂CH₂- oder -C(CH₃)HCH₂-
R⁴ einen linearen oder verzweigten Alkylenrest mit 1 bis 6 Kohlenstoffatom(en) je Rest bedeutet.
g 0 oder 1,
n 0 oder eine ganze Zahl von 1 bis 1500 und
m 0 oder eine ganze Zahl von 1 bis 100 bedeutet,
mit der Maßgabe, daß mindestens ein Rest Aje Molekül enthalten ist.

5. (Meth)acryloxygruppen aufweisende Organosiliciumverbindungen nach einem derAnsprüche 1 bis 4, dadurch gekennzeichnet, daß A ein Rest der Formel 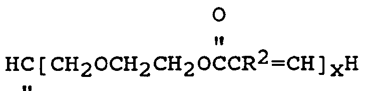 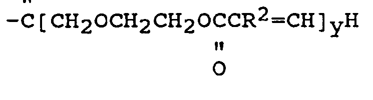 ist, wobei x 0 oder 1 und y 0 oder 1 ist, mit der Maßgabe, daß die Summe x+y 1 ist,
R² ein Wasserstoffatom oder einen Methylrest bedeutet.

6. Verfahren zur Herstellung von (Meth)acryloxygruppen aufweisenden Organosiliciumverbindungen nach einem der Ansprüche 1 bis 5, dadurch gekennzeichnet, daß eine organische Verbindung (1) der Formel 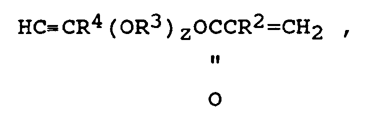 wobei R² ein Wasserstoffatom oder einen Methylrest,
R³ einen Rest der Formel -CH₂CH₂- oder -C(CH₃)HCH₂-,
R⁴ einen linearen oder verzweigten Alkylenrest mit 1 bis 6 Kohlenstoffatom(en) je Rest und
z 1, 2, 3 oder 4 bedeutet,
an eine Organosiliciumverbindung (2) mit mindestens einem Si-gebundenen Wasserstoffatom in ihrem Molekül in Gegenwart von die Anlagerung von Si-gebundenem Wasserstoff an aliphatische Mehrfachbindung förderndem Katalysator (3) angelagert wird.

7. Verfahren nach Anspruch 6, dadurch gekennzeichnet, daß als Organosiliciumverbindung (2) mit mindestens einem Si-gebundenen Wasserstoffatom in ihrem Molekül Silane der Formel 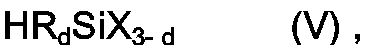 wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist, wobei R¹ einen Alkylrest mit 1 bis 8 Kohlenstoffatom(en) je Rest, der durch ein Ethersauerstoffatom substituiert sein kann, bedeutet, und d 0, 1 oder 2 ist,
verwendet werden.

8. Verfahren nach Anspruch 7, dadurch gekennzeichnet, daß die so erhaltenen (Meth)acryloxygruppen aufweisenden Silane durch Mischhydrolyse mit Chlor- oder Alkoxysilanen und/oder durch Kondensation mit kondensationsfähigen Organopolysiloxanen zu (Meth)acryloxygruppen aufweisenden Organopolysiloxanen umgesetzt werden.

9. Verfahren nach Anspruch 6, dadurch gekennzeichnet, daß als Organosiliciumverbindung (2) mit mindestens einem Si-gebundenen Wasserstoffatom in ihrem Molekül Organopolysiloxane der Formel 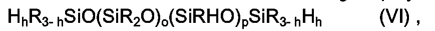 wobei R gleich oder verschieden ist, einen einwertigen, gegebenenfalls halogenierten Kohlenwasserstoffrest mit 1 bis 18 Kohlenstoffatom(en) je Rest bedeutet,
h 0 oder 1,
o 0 oder eine ganze Zahl von 1 bis 1500
p 0 oder eine ganze Zahl von 1 bis 100 bedeutet,
verwendet werden.

10. Verfahren nach Anspruch 6 oder 9, dadurch gekennzeichnet, daß die so erhaltenen (Meth)acryloxygruppen aufweisenden Organopolysiloxane mit Organopolysiloxanen (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

11. Durch Bestrahlung mit Licht vernetzbare Zusammensetzungen enthaltend
(A) (Meth)acryloxygruppen aufweisende Organopolysiloxane gemäß Anspruch 1, 4 oder 5 und
(B) Photosensibilisator.

12. Verwendung der Zusammensetzungen nach Anspruch 11 zur Herstellung von Überzügen.

## Patentansprüche (Patentansprüche für folgende(n) Vertragsstaat(en) : ES)

1. Verfahren zur Herstellung von (Meth)acryloxygruppen aufweisenden Organosiliciumverbindungen mit durchschnittlichen Einheiten der Formel 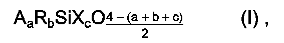 wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist,
wobei R¹ einen Alkylrest mit 1 bis 8 Kohlenstoffatom(en) je Rest, der durch ein Ethersauerstoffatom substituiert sein kann, bedeutet,
a 0 oder 1, durchschnittlich 0,01 bis 1,0,
b 0, 1, 2 oder 3, durchschnittlich 0,0 bis 3,0,
c 0, 1, 2 oder 3, durchschnittlich 0,0 bis 3,0,
und die Summe a+b+c ≦ 4, durchschnittlich 1,5 bis 4,0, ist und
A ein Rest der Formel 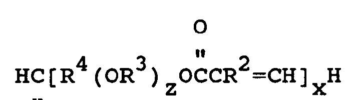 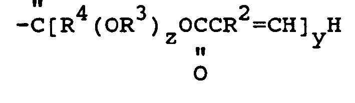 ist, wobei x 0 oder 1 und y 0 oder 1 ist, mit der Maßgabe, daß die Summe x+y 1 ist,
z 1, 2, 3 oder 4,
R² ein Wasserstoffatom oder einen Methylrest,
R³ einen Rest der Formel -CH₂CH₂- oder -C(CH₃)HCH₂- und
R⁴ einen linearen oder verzweigten Alkylenrest mit 1 bis 6 Kohlenstoffatom(en) je Rest bedeutet, mit der Maßgabe, daß mindestens ein Rest Aje Molekül enthalten ist,
durch Anlagerung einer organischen Verbindung (1) der Formel 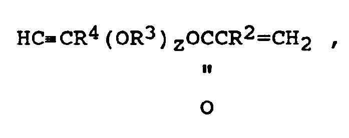 wobei R², R³, R⁴ und z die oben dafür angegebenene Bedeutung haben,
an eine Organosiliciumverbindung (2) mit mindestens einem Si-gebundenen Wasserstoffatom in ihrem Molekül in Gegenwart von die Anlagerung von Si-gebundenem Wasserstoff an aliphatische Mehrfachbindung förderndem Katalysator (3).

2. Verfahren nach Anspruch 1, dadurch gekennzeichnet, daß als Organosiliciumverbindung (2) mit mindestens einem Si-gebundenen Wasserstoffatom in ihrem Molekül Silane der Formel 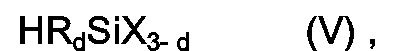 wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel -OR¹ ist, wobei R¹ einen Alkylrest mit 1 bis 8 Kohlenstoffatom(en) je Rest, der durch ein Ethersauerstoffatom substituiert sein kann, bedeutet, und d 0, 1 oder 2 ist,
verwendet werden.

3. Verfahren nach Anspruch 2, dadurch gekennzeichnet, daß die so erhaltenen (Meth)acryloxygruppen aufweisenden Silane durch Mischhydrolyse mit Chlor- oder Alkoxysilanen und/oder durch Kondensation mit kondensationsfähigen Organopolysiloxanen zu (Meth)acryloxygruppen aufweisenden Organopolysiloxanen umgesetzt werden.

4. Verfahren nach Anspruch 1, dadurch gekennzeichnet, daß als Organosiliciumverbindung (2) mit mindestens einem Si-gebundenen Wasserstoffatom in ihrem Molekül Organopolysiloxane der Formel 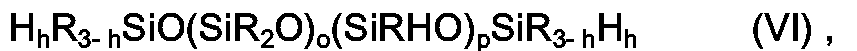 wobei R gleich oder verschieden ist, einen einwertigen, gegebenenfalls halogenierten Kohlenwasserstoffrest mit 1 bis 18 Kohlenstoffatom(en) je Rest bedeutet,
h 0 oder 1,
o 0 oder eine ganze Zahl von 1 bis 1500
p 0 oder eine ganze Zahl von 1 bis 100 bedeutet,
verwendet werden.

5. Verfahren nach Anspruch 1 oder 4, dadurch gekennzeichnet, daß die so erhaltenen (Meth)acryloxygruppen aufweisenden Organopolysiloxane mit Organopolysiloxanen (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

6. Verwendung von durch Bestrahlung mit Licht vernetzbare Zusammensetzungen enthaltend
(A) (Meth)acryloxygruppen aufweisende Organopolysiloxane hergestellt nach Anspruch 1, 3, 4 oder 5 und
(B) Photosensibilisator
zur Herstellung von Überzügen.

## Claims (Claims for the following Contracting State(s) : AT, BE, CH, DE, FR, GB, IT, Ll, NL)

1. Organosilicon compounds which contain (meth)acryloxy groups and having average units of the formula 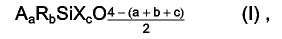 where the radicals Rare identical or different and denote monovalent, optionally halogenated hydrocarbon radicals having 1 to 18 carbon atom(s) per radical, the radicals X are identical or different and are a chlorine atom or a radical of the formula -OR¹, where R¹ denotes an alkyl radical having 1 to 8 carbon atom(s) per radical, which can be substituted by an ether oxygen atom,
a is 0 or 1, and on average 0.01 to 1.0,
b is 0, 1, 2 or 3, and on average 0.0 to 3.0,
c is 0, 1, 2 or 3, and on average 0.0 to 3.0,
the sum a+b+c 24, and is on average 1.5 to 4.0, and
A is a radical of the formula 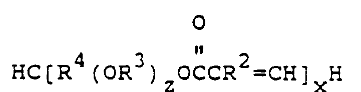 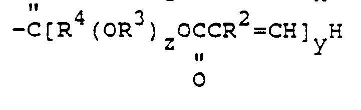 where x is 0 or 1 and y is 0 or 1, with the proviso that the sum x+y is 1,
z denotes 1, 2, 3 or 4,
R² denotes a hydrogen atom or a methyl radical,
R³ denotes a radical of the formula -CH₂CH₂- or -C(CH₃)HCH₂- and R⁴ denotes a linear or branched alkylene radical having 1 to 6 carbon atom(s) per radical,
with the proviso that the compound contains at least one radical A per molecule.

2. Organosilicon compounds containing (meth)acryloxy groups according to Claim 1, characterised in that they are silanes or organopolysiloxanes.

3. Organosilicon compounds containing (meth)acryloxy groups according to Claim 1 or 2, characterised in that they are silanes of the formula 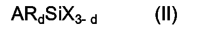 where the radicals Rare identical or different and denote monovalent, optionally halogenated hydrocarbon radicals having 1 to 18 carbon atom(s) per radical, the radicals X are identical or different and are a chlorine atom or a radical of the formula -OR¹, where R¹ denotes an alkyl radical having 1 to 8 carbon atom(s) per radical, which can be substituted by an ether oxygen atom, d denotes 0, 1 or 2 and
A is a radical of the formula 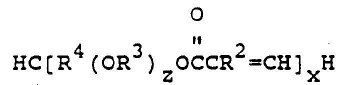 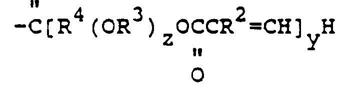 where x is 0 or 1 and y is 0 or 1, with the proviso that the sum x+y is 1,
z denotes 1, 2, 3 or 4,
R² denotes a hydrogen atom or a methyl radical,
R³ denotes a radical of the formula -CH₂CH₂- or -C(CH₃)HCH₂- and R⁴ denotes a linear or branched alkylene radical having 1 to 6 carbon atom(s) per radical.

4. Organosilicon compounds containing (meth)acryloxy groups according to Claim 1 or 2, characterised in that they are organopolysiloxanes of the formula 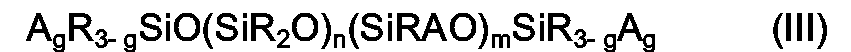 where the radicals Rare identical or different and denote monovalent, optionally halogenated hydrocarbon radicals having 1 to 18 carbon atoms(s) per radical,
A is a radical of the formula 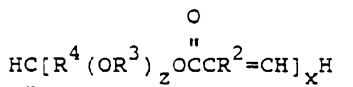 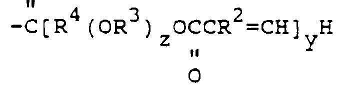 where x is 0 or 1 and y is 0 or 1, with the proviso that the sum x+y is 1,
z denotes 1, 2, 3 or 4,
R² denotes a hydrogen atom or a methyl radical,
R³ denotes a radical of the formula -CH₂CH₂- or -C(CH₃)HCH₂-, R⁴ denotes a linear or branched alkylene radical having 1 to 6 carbon atom(s) per radical,
g denotes 0 or 1,
n denotes 0 or an integer from 1 to 1500 and
m denotes 0 or an integer from 1 to 100,
with the proviso that the compounds contain at least one radical A per molecule.

5. Organosilicon compounds containing (meth)acryloxy groups according to one of Claims 1 to 4, characterised in that A is a radical of the formula 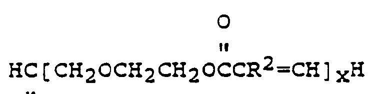 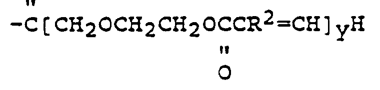 where x is 0 or 1 and y is 0 or 1, with the proviso that the sum x+y is 1, and R² denotes a hydrogen atom or a methyl radical.

6. Process for the preparation of organosilicon compounds containing (meth)acryloxy groups according to one of Claims 1 to 5, characterised in that an organic compound (1) of the formula 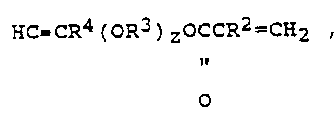 where R² denotes a hydrogen atom or a methyl radical, R³ denotes a radical of the formula -CH₂CH₂- or -C(CH₃)HCH₂-, R⁴ denotes a linear or branched alkylene radical having 1 to 6 carbon atom(s) per radical and z denotes 1, 2, 3 or 4, is added onto an organosilicon compound (2) having at least one Si-bonded hydrogen atom in its molecule in the presence of a catalyst (3) which promotes the addition of Si-bonded hydrogen onto an aliphatic multiple bond.

7. Process according to Claim 6, characterised in that silanes of the formula 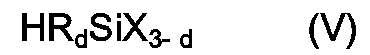 where the radicals Rare identical or different and denote monovalent, optionally halogenated hydrocarbon radicals having 1 to 18 carbon atom(s) per radical, the radicals X are identical or different and are chlorine atoms or a radical of the formula -OR¹, where R¹ denotes an alkyl radical having 1 to 8 carbon atom(s) per radical, which can be substituted by an ether oxygen atom, and d is 0, 1 or 2, are used as the organosilicon compound (2) having at least one Si-bonded hydrogen atom in its molecule.

8. Process according to Claim 7, characterised in that the resulting silanes containing (meth)acryloxy groups are converted into organopolysiloxanes containing (meth)acryloxy groups by mixed hydrolysis with chloro- or alkoxysilanes and/or by condensation with organopolysiloxanes which are capable of condensation.

9. Process according to Claim 6, characterised in that organopolysiloxanes of the formula 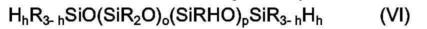 where the radicals Rare identical or different and denote monovalent, optionally halogenated hydrocarbon radicals having 1 to 18 carbon atom(s) per radical,
h denotes 0 or 1,
o denotes 0 or an integer from 1 to 1500 and
p denotes 0 or an integer from 1 to 100, are used as the organosilicon compound (2) having at least one Si-bonded hydrogen atom in its molecule.

10. Process according to Claim 6 or 9, characterised in that the resulting organopolysiloxanes containing (meth)acryloxy groups are equilibrated with organopolysiloxanes (4) chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

11. Compositions which can be crosslinked by irradiation with light and contain
(A) an organopolysiloxane containing (meth)acryloxy groups according to Claim 1, 4 or 5 and
(B) a photosensitiser.

12. Use of compositions according to Claim 11 for the production of coatings.

## Claims (Claims for the following Contracting State(s) : ES)

1. Process for the preparation of organosilicon compounds which contain (meth)acryloxy groups and having average units of the formula 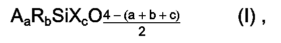 where the radicals Rare identical or different and denote monovalent, optionally halogenated hydrocarbon radicals having 1 to 18 carbon atom(s) per radical, the radicals X are identical or different and are a chlorine atom or a radical of the formula -OR¹, where R¹ denotes an alkyl radical having 1 to 8 carbon atom(s) per radical, which can be substituted by an ether oxygen atom,
a is 0 or 1, and on average 0.01 to 1.0,
b is 0, 1, 2 or 3, and on average 0.0 to 3.0,
c is 0, 1, 2 or 3, and on average 0.0 to 3.0,
the sum a+b+c 24, and is on average 1.5 to 4.0, and
A is a radical of the formula 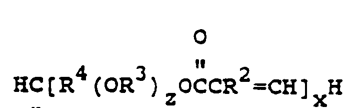 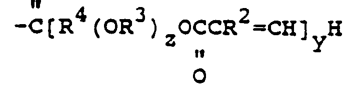 where x is 0 or 1 and y is 0 or 1, with the proviso that the sum x+y is 1,
z denotes 1, 2, 3 or 4,
R² denotes a hydrogen atom or a methyl radical,
R³ denotes a radical of the formula -CH₂CH₂- or -C(CH₃)HCH₂- and R⁴ denotes a linear or branched alkylene radical having 1 to 6 carbon atom(s) per radical,
with the proviso that the compound contains at least one radical A per molecule,
by addition of an organic compound (I) of the formula 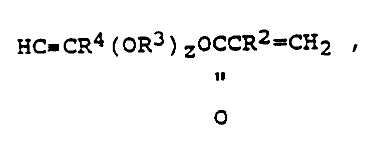 where R², R³, R⁴ and z have the meaning given above for these symbols,
onto an organosilicon compound (2) having at least one Si-bonded hydrogen atom in its molecule in the presence of a catalyst (3) which promotes the addition of Si-bonded hydrogen onto an aliphatic multiple bond.

2. Process according to Claim 1, characterised in that silanes of the formula 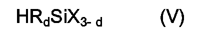 where the radicals Rare identical or different and denote monovalent, optionally halogenated hydrocarbon radicals having 1 to 18 carbon atom(s) per radical, the radicals X are identical or different and are chlorine atoms or a radical of the formula -OR¹, where R¹ denotes an alkyl radical having 1 to 8 carbon atom(s) per radical, which can be substituted by an ether oxygen atom, and d is 0, 1 or 2, are used as the organosilicon compound (2) having at least one Si-bonded hydrogen atom in its molecule.

3. Process according to Claim 2, characterised in that the resulting silanes containing (meth)acryloxy groups are converted into organopolysiloxanes containing (meth)acryloxy groups by mixed hydrolysis with chloro- or alkoxysilanes and/or by condensation with organopolysiloxanes which are capable of condensation.

4. Process according to Claim 1, characterised in that organopolysiloxanes of the formula 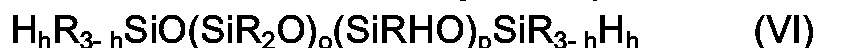 where the radicals Rare identical or different and denote monovalent, optionally halogenated hydrocarbon radicals having 1 to 18 carbon atom(s) per radical,
h denotes 0 or 1,
o denotes 0 or an integer from 1 to 1500 and
p denotes 0 or an integer from 1 to 100,
are used as the organosilicon compound (2) having at least one Si-bonded hydrogen atom in its molecule.

5. Process according to Claim 1 or 4, characterised in that the resulting organopolysiloxanes containing (meth)acryloxy groups are equilibrated with organopolysiloxanes (4) chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

6. Use of compositions which can be crosslinked by irradiation with light and containing
(A) an organopolysiloxane containing (meth)acryloxy groups prepared according to Claim 1, 3, 4 or 5 and
(B) a photosensitiser
for the production of coatings.

## Revendications (Revendications pour l'(les) Etat(s) contractant(s) suivant(s) : suivants : AT, BE, CH, DE, FR, GB, IT, LI, NL)

1. Composés organosiliciés comportant des groupes (méth)acryloxy avec des unités moyennes de formule 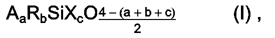 où R est identique ou différent et représente un reste hydrocarboné monovalent, éventuellement halogéné, avec de 1 à 18 atome(s) de carbone par reste,
X est identique ou différent et représente un atome de chlore ou un reste de formule -OR¹,
où R¹ représente un reste alkyle ayant de 1 à 8 atome(s) de carbone par reste, ce reste pouvant être substitué par un atome d'oxygène d'éther,
a est 0, ou 1, en moyenne de 0,01 à 1,0,
b est 0, 1, 2 ou 3, en moyenne de 0,0 à 3,0,
c est 0, 1, 2 ou 3, en moyenne de 0,0 à 3,0,
et la somme a + b + c est inférieure ou égale à 4, cette somme étant en moyenne de 1,5 à 4,0, et
A représente un reste de formule 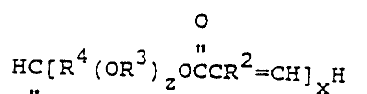 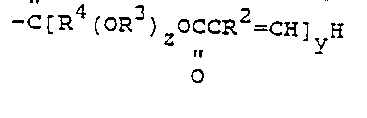 où
x est 0, ou 1 et y est 0 ou 1, à la condition que la somme x + y soit égale à 1,
z est 1, 2, 3 ou 4,
R² représente un atome d'hydrogène ou un reste méthyle,
R³ représente un reste de formule -CH₂CH₂- ou -C(CH₃)-HCH₂- et
R⁴ représente un reste alkylène linéaire ou ramifié ayant de 1 à 6 atome(s) de carbone par reste, à la condition qu'il y ait au moins un reste A par molécule.

2. Composés organosiliciés comportant des groupes (méth)acryloxy selon la revendication 1, caractérisés en ce qu' ils sont des silanes ou des organopolysiloxanes.

3. Composés organosiliciés comportant des groupes (méth)acryloxy selon la revendication 1 ou 2, caractérisés en ce qu'ils sont des silanes de formule 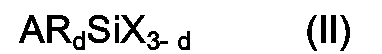 où R est identique ou différent et représente un reste hydrocarboné monovalent, éventuellement halogéné, avec de 1 à 18 atome(s) de carbone par reste,
X est identique ou différent et représente un atome de chlore ou un reste de formule -OR¹,
où R¹ représente un reste alkyle ayant de 1 à 8 atome(s) de carbone par reste, ce reste pouvant être substitué par un atome d'oxygène d'éther,
d est 0, 1 ou 2, et
A représente un reste de formule 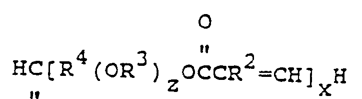 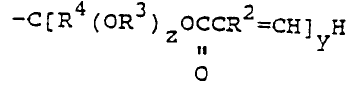 où x est 0 ou 1 et y est 0 ou 1, à la condition que la somme x + y soit égale à 1,
z est 1, 2, 3 ou 4,
R² est un atome d'hydrogène ou un reste méthyle,
R³ est un reste de formule -CH₂CH₂- ou -C(CH₃)HCH₂- et
R⁴ est un reste alkylène linéaire ou ramifié avec de 1 à 6 atome(s) de carbone par reste.

4. Composés organosiliciés comportant des groupes (méth)acryloxy selon la revendication 1 ou 2, caractérisé en ce qu'ils sont des organopolysiloxanes de formule 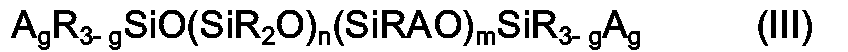 où R est identique ou différent et représente un reste hydrocarboné monovalent, éventuellement halogéné, avec de 1 à 18 atome(s) de carbone par reste,
A est un reste de formule 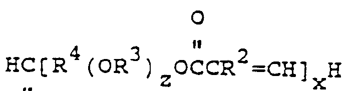 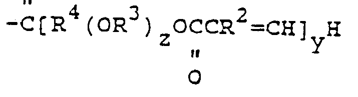 où x est 0 ou 1 et y est 0 ou 1, à la condition que la somme x + y soit égale à 1,
z est 1, 2, 3 ou 4,
R² est un atome d'hydrogène ou un reste méthyle,
R³ est un reste de formule -CH₂CH₂- ou -C(CH₃)HCH₂-R⁴ est un reste alkylène linéaire ou ramifié ayant de 1 à 6 atome(s) de carbone par reste,
g est 0 ou 1,
n est 0 ou un nombre entier de 1 à 1500, et
m est 0 ou un nombre entier de 1 à 100,
à la condition qu'il y ait au moins un reste A par molécule.

5. Composés organosiliciés comportant des groupes (méth)acryloxy selon l'une des revendications 1 à 4, caractérisé en ce que A est un reste de formule 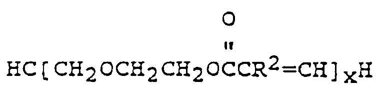 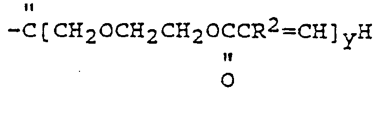 où x est 0 ou 1 et y est 0 ou 1, à la condition que la somme x + y soit égale à 1,
R² est un atome d'hydrogène ou un reste méthyle.

6. Procédé pour préparer des composés organosiliciés comportant des groupes (méth)acryloxy selon l'une des revendications 1 à 5, caractérisé en ce que l'on fixe un composé organique (1) de formule 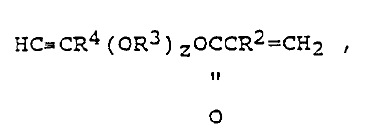 où R² représente un atome d'hydrogène ou un reste méthyle,
R³ représente un reste de formule -CH₂CH₂- ou -C(CH₃)HCH₂-,
R⁴ représente un reste alkylène linéaire ou ramifié avec de 1 à 6 atome(s) de carbone par reste, et
z est 1, 2, 3 ou 4,
sur un composé organosilicié (2) ayant dans sa molécule au moins un atome d'hydrogène lié au silicium, en présence d'un catalyseur (3) provoquant la fixation d'hydrogène lié au silicium sur une liaison multiple aliphatique.

7. Procédé selon la revendication 6, caractérisé en ce que l'on utilise, comme composé organosilicié (2) avec au moins un atome d'hvdro^{q}ène lié au silicium dans sa molécule, des silanes de formule 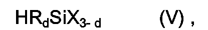 où R est identique ou différent et représente un reste hydrocarboné monovalent, éventuellement halogéné, avec de 1 à 18 atome(s) de carbone par reste,
X est identique ou différent et représente un atome de chlore ou un reste de formule -OR¹, où R¹ représente un reste alkyle avec de 1 à 8 atome(s) de carbone par reste, qui peut être substitué par un atome d'oxygène d'éther, et d est 0, 1 ou 2.

8. Procédé selon la revendication 7, caractérisé en ce que les silanes ainsi obtenus, qui comportent des groupes (méth)acryloxy sont transformés en organopolysiloxanes comportant des groupes (méth)acryloxy par cohydrolyse avec des chlorosilanes ou des alcoxysilanes et/ou par condensation avec des organopolysiloxanes susceptibles de se condenser.

9. Procédé selon la revendication 6, caractérisé en ce que, comme composé organosilicié (2) avec au moins un atome d'hydrogène lié au silicium dans sa molécule, on utilise des organopolysiloxanes de formule 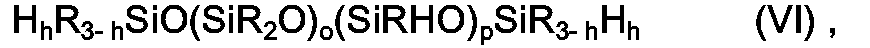 où R est identique ou différent et représente un reste hydrocarboné monovalent, éventuellement halogéné, avec de 1 à 18 atome(s) de carbone par reste,
h est 0 ou 1,
o est 0 ou un nombre entier de 1 à 1500
p est 0 ou un nombre entier de 1 à 100.

10. Procédé selon la revendication 6 ou 9, caractérisé en ce que les organopolysiloxanes ainsi obtenus, qui comportent des groupes (méth)acryloxy, sont équilibrés avec des organopolysiloxanes (4) choisis dans le groupe constitué par les organopolysiloxanes linéaires, comportant en fin de chaînes des groupes triorganosiloxy, les organopolysiloxanes linéaires, comportant en fin de chaînes des groupes hydroxyle, les organopolysiloxanes cycliques et les copolymères obtenus à partir d'unités diorganosiloxanes et monoorganosiloxanes.

11. Compositions réticulables par les rayons lumineux comportant
(A) des organopolysiloxanes, avec des groupes (méth)acryloxy, selon la revendication 1, 4 ou 5, et
(B) un photosensibilisateur.

12. Utilisation des compositions selon la revendication 11 pour préparer des revêtements.

## Revendications (Revendications pour l'(les) Etat(s) contractant(s) suivant(s) : suivant : ES)

1. Procédé pour préparer des composés organosiliciés comportant des groupes (méth)acryloxy avec des unités moyennes de formule 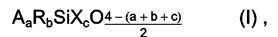 où R est identique ou différent et représente un reste hydrocarboné monovalent, éventuellement halogéné, avec de 1 à 18 atome(s) de carbone par reste,
X est identique ou différent et représente un atome de chlore ou un reste de formule -OR¹,
où R¹ représente un reste alkyle ayant de 1 à 8 atome(s) de carbone par reste, ce reste pouvant être substitué par un atome d'oxygène d'éther,
a est 0, ou 1, en moyenne de 0,01 à 1,0,
b est 0, 1, 2 ou 3, en moyenne de 0,0 à 3,0,
c est 0, 1, 2 ou 3, en moyenne de 0,0 à 3,0,
et la somme a + b + c est inférieure ou égale à 4, cette somme étant en moyenne de 1,5 à 4,0, et
A représente un reste de formule 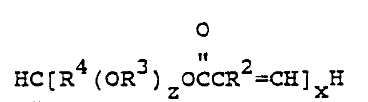 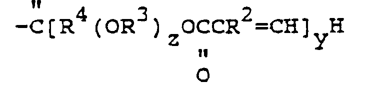 où
x est 0, ou 1 et y est 0 ou 1, à la condition que la somme x + y soit égale à 1,
z est 1, 2, 3 ou 4,
R² représente un atome d'hydrogène ou un reste méthyle,
R³ représente un reste de formule -CH₂CH₂- ou -C(CH₃)-HCH₂- et
R⁴ représente un reste alkylène linéaire ou ramifié ayant de 1 à 6 atome(s) de carbone par reste, à la condition qu'il y ait au moins un reste A par molécule,
par fixation d'un composé organique (1) de formule 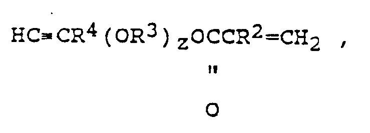 où R², R³, R⁴ et z ont la signification donnée plus haut, sur un composé organosilicié (2), avec au moins un atome d'hydrogène lié au silicium dans sa molécule, en présence d'un catalyseur (3) provoquant la fixation d'hydrogène lié au silicium sur une liaison multiple aliphatique.

2. Procédé selon la revendication 1, caractérisé en ce que comme composé organosilicié (2), avec au moins un atome d'hydrogène lié au silicium dans sa molécule, on utilise des silanes de formule 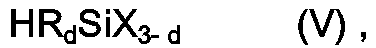 où R est identique ou différent et représente un reste hydrocarboné monovalent, éventuellement halogéné, avec de 1 à 18 atome(s) de carbone par reste,
X est identique ou différent et représente un atome de chlore ou un reste de formule -OR¹,
où R¹ représente un reste alkyle ayant de 1 à 8 atome(s) de carbone par reste, ce reste pouvant être substitué par un atome d'oxygène d'éther, et
d est 0, 1 ou 2.

3. Procédé selon la revendication 2, caractérisé en ce que les silanes ainsi obtenus, qui présentent des groupes (méth)acryloxy, sont transformés en organopolysiloxanes, comportant des groupes (méth)acryloxy, par co-hydrolyse avec des chlorosilanes ou des alcoxysilanes et/ou par condensation avec des organopolysiloxanes susceptibles de se condenser.

4. Procédé selon la revendication 1, caractérisé en ce que, comme composé organosilicié (2) avec au moins un atome d'hydrogène lié au silicium dans sa molécule, on utilise des organopolysiloxanes de formule 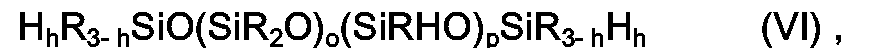 où R est identique ou différent et représente un reste hydrocarboné monovalent, éventuellement halogéné, avec de 1 à 18 atome(s) de carbone par reste,
h est 0 ou 1,
o est 0 ou un nombre entier de 1 à 1500,
p est 0 ou un nombre entier de 1 à 100.

5. Procédé selon la revendication 1 ou 4, caractérisé en ce que les organopolysiloxanes ainsi obtenus, comportant des groupes (méth)acryloxy, sont équilibrés avec des organopolysiloxanes (4) choisis dans le groupe constitué par les organopolysiloxanes linéaires, comportant des groupes triorganosiloxy en fin de chaînes, les organopolysiloxanes linéaires comportant des groupes hydroxyle en fin de chaînes, les organopolysiloxanes cycliques et les copolymères obtenus à partir d'unités de diorganosiloxanes et de monoorganosiloxanes.

6. Utilisation de composés réticulables par les rayons lumineux comportant
(A) des organopolysiloxanes, ayant des groupes (méth)acryloxy, préparés selon la revendication 1, 3, 4 ou 5, et
(B) un photosensibilisateur
pour la préparation de revêtements.
